(19) **Europäisches Patentamt / European Patent Office / Office européen des brevets**

(11) **EP 4 748 514 A1**

(12) **EUROPEAN PATENT APPLICATION**
published in accordance with Art. 153(4) EPC

(43) Date of publication:
**27.05.2026 Bulletin 2026/22**

(21) Application number: **23953053.8**

(22) Date of filing: **21.09.2023**

(51) International Patent Classification (IPC):
**B22F 1/05** (2022.01)   **B22F 1/102** (2022.01)

(52) Cooperative Patent Classification (CPC):
**B22F 1/00; B22F 1/05; B22F 1/102; B22F 1/14;
B22F 1/16; B22F 3/00; C08K 3/08; C08K 3/10;
C08L 101/00; H01F 1/26; H01F 27/255; H01F 41/02**

(86) International application number:
**PCT/JP2023/034304**

(87) International publication number:
**WO 2025/062569 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Resonac Corporation**
**Tokyo 105-7325 (JP)**

(72) Inventors:
• **SONOKAWA Hiroki**
**Minato-ku, Tokyo 105-7325 (JP)**

• **ENDO Yoshinori**
**Minato-ku, Tokyo 105-7325 (JP)**
• **TANAKA Mika**
**Minato-ku, Tokyo 105-7325 (JP)**
• **OKADA Junko**
**Minato-ku, Tokyo 105-7325 (JP)**
• **HAYAKAZE Takuya**
**Minato-ku, Tokyo 105-7325 (JP)**

(74) Representative: **Hoffmann Eitle**
**Patent- und Rechtsanwälte PartmbB
Arabellastraße 30
81925 München (DE)**

(54) **COMPOUND POWDER, MOLDED OBJECT, CURED OBJECT, AND METHOD FOR PRODUCING COMPOUND POWDER**

(57)    A compound contains a metal powder, and a resin composition. The metal powder is a soft magnetic material. The resin composition contains a thermosetting resin. The compound powder contains a plurality of large particles with a particle diameter of greater than 500 $\mu$m. A content of the large particles in the compound powder is 40% by mass or more and 100% by mass or less. At least a part of the plurality of large particles includes at least one metal particle constituting the metal powder, and the resin composition covering the metal particle.

EP 4 748 514 A1

*Fig.1*

**Description**

**Technical Field**

The present disclosure relates to a compound powder, a molded body, a cured product, and a method for producing a compound powder.

**Background Art**

A compound powder containing a soft magnetic metal powder and an insulating resin composition is used as a raw material for various industrial products (refer to Patent Literature 1 described below). For example, the compound powder is used as a raw material for an inductor, a transformer, a reactor, a thyristor valve, a noise filter (an EMI filter), a choke coil, an iron core for a motor, a rotor and a yoke of a motor used for general household electrical appliances and industrial appliances, an electromagnetic shield, a solenoid core (a fixed iron core) for an electromagnetic valve, and the like.

**Citation List**

**Patent Literature**

Patent Literature 1: Japanese Unexamined Patent Publication No. 2008-277374

**Summary of Invention**

**Technical Problem**

The metal powder contained in the compound powder has not only a soft magnetic characteristic (a comparatively high relative magnetic permeability and a comparatively low coercive force) but also an electrical conduction property. Therefore, the compound powder of the related art does not have a sufficient electrical insulating property (such as a dielectric withstanding voltage). As the content of the metal powder in the compound powder increases, the soft magnetic characteristic of the compound powder is improved, but the electrical insulating property of the compound powder is degraded. The compound powder with a poor electrical insulating property causes an electrical short circuit and an eddy current loss in the industrial products described above.

Further, the metal powder is easily separated from the resin composition. Due to the separation between the metal powder and the resin composition, the blocking (the agglomeration) of the compound powder easily occurs. The blocking of the compound powder impairs the fluidity of the compound powder, and causes an appearance defect in the industrial products produced by molding the compound powder. For example, due to the blocking of the compound powder associated with transfer molding or compression molding of the compound powder, the appearance defect such as a flow mark and a whitish haze (or a white mark) easily occurs on the surface of a cured product of the compound powder.

At least a part of particles constituting the compound powder is a composite particle composed of at least one metal particle constituting the metal powder, and a resin composition covering the metal particle, and the electrical insulating property of the compound powder is derived from the resin composition covering the metal particle. Therefore, as the resin composition covering the metal particle increases, the particle diameter of each composite particle (the thickness of the resin composition covering the metal particle) increases, and the electrical insulating property of each composite particle itself is improved. In other words, as the resin composition covering the metal particles decreases, the particle diameter of the composite particle decreases, and the electrical insulating property of each composite particle itself is degraded. Further, as the particle diameter of the metal particle decreases, the resin composition is more easily peeled from the surface of the metal particle. Therefore, it is expected that the electrical insulating property of the compound powder is improved by removing particles with a comparatively small particle diameter from the compound powder.

Further, as the particle diameter of each particle constituting the compound powder decreases, the specific surface area of each particle increases, and a plurality of particles are easily in contact with each other to agglomerate. That is, as the size of each particle constituting the compound powder decreases, the blocking (the agglomeration) of the compound powder more easily occurs. Therefore, it is expected that the blocking of the compound powder is suppressed by removing the particles with a comparatively small particle diameter from the compound powder.

On the basis of the consideration described above, by focusing on the particle size distribution of the compound powder, the present inventors have devised the present invention in which the electrical insulating property of the compound powder is improved and the blocking of the compound powder is suppressed by controlling the particle size distribution of the compound powder.

An object of one aspect of the present invention is to provide a compound powder with an excellent electrical insulating property (dielectric withstanding voltage) and suppressed blocking (agglomeration), a molded body containing the compound powder, a cured product of the compound powder, and a method for producing the compound powder.

**Solution to Problem**

For example, one aspect of the present invention relates to [1] to [10] described below.

[1] A compound powder containing:

a metal powder; and
a resin composition,
in which the metal powder is a soft magnetic material,
the resin composition contains a thermosetting resin,
the compound powder contains a plurality of large particles with a particle diameter of greater than 500 $\mu$m, and
a content of the large particles in the compound powder is 40% by mass or more and 100% by mass or less.

[2] The compound powder according to [1],

in which at least a part of the plurality of large particles includes
at least one metal particle constituting the metal powder, and
a resin composition covering the metal particle.

[3] The compound powder according to [1] or [2],
in which a minimum melt viscosity of the compound powder at 175°C is 10 Pa·s or more and 250 Pa·s or less.
[4] The compound powder according to any one of [1] to [3],
in which a content of the metal powder in the compound powder is 94% by mass or more and 98% by mass or less.
[5] The compound powder according to any one of [1] to [4],
in which the resin composition further contains at least one component selected from the group consisting of a curing agent, a curing accelerator, a coupling agent, and a wax.
[6] The compound powder according to any one of [1] to [5],

in which the compound powder is used for a magnetic core of a coil.
Application of the compound powder according to any one of [1] to [5] to a magnetic core of a coil.

[7] The compound powder according to any one of [1] to [5],

in which the compound powder is a sealing material.
Application of the compound powder according to any one of [1] to [5] to a sealing material.

[8] A molded body (a compact) containing
the compound powder according to any one of [1] to [7].
[9] A cured product of the compound powder according to any one of [1] to [7].
[10] A method for producing the compound powder according to any one of [1] to [7], including:

a step of preparing a mixed powder containing a metal powder and a resin composition; and
a step of classifying the mixed powder to obtain a compound powder containing a plurality of large particles.

**Advantageous Effects of Invention**

According to one aspect of the present invention, the compound powder with an excellent electrical insulating property (dielectric withstanding voltage) and the suppressed blocking (agglomeration), the molded body containing the compound powder, the cured product of the compound powder, and the method for producing the compound powder are provided.

**Brief Description of Drawings**

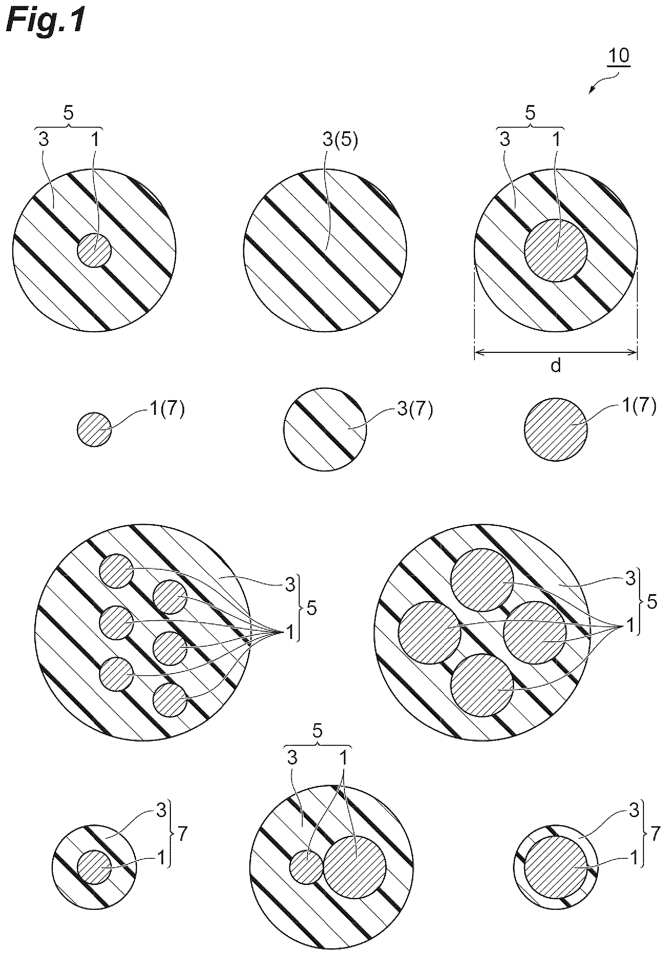

[FIG. 1] FIG. 1 is a schematic cross-sectional view of a compound powder according to one embodiment of the present invention.

**Description of Embodiments**

Hereinafter, a preferred embodiment of the present invention will be described with reference to the drawings. In the drawings, equivalent reference numerals are applied to equivalent constituents. The present invention is not limited to the following embodiment.

(Compound Powder, Molded Body, and Cured Product)

As illustrated in FIG. 1, a compound powder 10 according to this embodiment is a powder at an ordinary temperature (for example, $(20\pm15)$°C). The compound powder 10 contains a metal powder, and a resin composition 3. The metal powder consists of a plurality of metal particles 1. The metal powder is a soft magnetic material. The metal powder may be referred to as a metal filler. The resin composition 3 contains a thermosetting resin. The resin composition 3 has an electrical insulating property. The compound powder 10 may contain one or both of an uncured product of the resin composition 3 and a semi-cured product of the resin composition 3 (the resin composition 3 in a stage B). In a compact containing the compound powder 10, or a cured product of the compound powder 10, the resin composition 3 binds the plurality of metal particles 1 to each other. Further, the resin composition 3 between the plurality of adjacent metal particles 1 electrically insulates the plurality of metal particles 1 from each other. The compound powder 10 may consist of only the metal powder and the resin composition 3. The compound powder 10 may further contain other components in addition to the metal powder and the resin composition 3.

A compact according to this embodiment contains the compound powder 10 described above. The compact according to this embodiment may consist of only the compound powder 10. The compact may further contain other members in addition to the compound powder 10. The compact may contain one or both of the uncured product of the resin composition 3 and the semi-cured product of the resin composition 3. A cured product according to this embodiment is the cured product of the compound powder 10 described above, and includes a cured product of the resin composition 3 (the resin composition 3 in a stage C).

An electrical insulating property (for example, a high dielectric withstanding voltage) described below is a characteristic common to the compound powder 10, the compact, and the cured product. A soft magnetic characteristic (for example, a high relative magnetic permeability) described below is also a characteristic common to the compound powder 10, the compact, and the cured product. A mechanical strength (for example, a high bending strength) described below is the characteristic of the cured product of the compound powder 10.

The compound powder 10 contains a plurality of large particles 5 with a particle diameter d of greater than 500 $\mu$m. The particle diameter d may be referred to as the maximum width (the major diameter) of one particle. The content of the large particles 5 in the compound powder 10 is 40% by mass or more and 100% by mass or less.

The compound powder 10 in which the content of the large particles 5 is 40% by mass or more is excellent in the electrical insulating property (the dielectric withstanding voltage), compared to a compound powder in which the content of the large particles 5 is less than 40% by mass. Therefore, an electrical short circuit and an eddy current loss in industrial products produced from the compound powder 10 are suppressed.

The blocking (the agglomeration) of the compound powder 10 in which the content of the large particles 5 is 40% by mass or more is easily suppressed, compared to the compound powder in which the content of the large particles 5 is less than 40% by mass. Therefore, the blocking of the compound powder 10 associated with transfer molding or compression molding of the compound powder 10 is suppressed, the compound powder 10 easily flows, and an appearance defect due to the blocking is less likely to occur on the surface of the cured product of the compound powder 10.

From the viewpoint that the electrical insulating property of the compound powder 10 is easily improved, the content of the large particles 5 in the compound powder 10 may be preferably 60% by mass or more and 100% by mass or less, and more preferably 80% by mass or more and 100% by mass or less. The compound powder 10 may consist of only the plurality of large particles 5. That is, the content of the large particles 5 in the compound powder 10 may be 100% by mass.

The compound powder 10 may further contain a plurality of small particles 7 with a particle diameter d of 500 $\mu$m or less, in addition to the plurality of large particles 5, insofar as the content of the large particles 5 is 40% by mass or more. That is, the content of the small particles 7 in the compound powder 10 is 0% by mass or more and 60% by mass or less.

At least a part of the plurality of large particles 5 may include at least one metal particle 1 constituting the metal powder, and a resin composition covering the metal particles 1. A "composite particle" described below indicates a particle including at least one metal particle 1, and the resin composition 3 covering the metal particle 1.

As the resin composition 3 covering the metal particle 1 increases, the particle diameter of the composite particle (the thickness of the resin composition 3 covering the metal particle 1) increases. As a result thereof, the particle diameter of the composite particle increases, and the large particles 5 with a particle diameter d of greater than 500 μm are easily formed. In a case where the surface of the large particle 5 is composed of the resin composition 3 having an electrical insulating property, the large particle 5 itself is excellent in the electrical insulating property, and the electrical insulating property of the compound powder 10 containing the plurality of large particles 5 is also improved.

In accordance with an increase in the large particles 5 (an increase in the particle diameter of each composite particle), the specific surface area of the compound powder 10 decreases, and contact and agglomeration between the plurality of particles in the compound powder 10 are easily suppressed. That is, in accordance with an increase in the large particles 5 (an increase in the particle diameter of each composite particle), the blocking (the agglomeration) of the compound powder 10 is easily suppressed.

All of the plurality of large particles 5 contained in the compound powder 10 may be composite particles. Only a part of the plurality of large particles 5 may be the composite particle, or the remnant of the plurality of large particles 5 may be particles consisting of only the resin composition 3, and at least one particle of the metal particles 1 not covered with the resin composition 3.

In a case where the compound powder 10 contains the plurality of small particles 7, a part or all of the plurality of small particles 7 may be composite particles. For example, only a part of the plurality of small particles 7 may be the composite particle, and the remnant of the plurality of small particles 7 may be particles consisting of only the resin composition 3, and at least one particle of the metal particles 1 not covered with the resin composition 3. All of the plurality of small particles 7 contained in the compound powder 10 may be the metal particles 1 not covered with the resin composition 3. As the particle diameter of the metal particles 1 decreases, the resin composition 3 is more likely to be peeled from the surface of the metal particle 1, and the large particles 5 are less likely to be formed. Therefore, the plurality of small particles 7 are likely to include the metal particles 1 not covered with the resin composition 3.

One composite particle may include the plurality of metal particles 1, and the resin composition 3 covering the plurality of metal particles 1. The resin composition 3 included in the one composite particle may cover a part or all of the surface of the metal particle 1 included in the composite particle. The resin composition 3 included in one composite particle may directly cover the surface of the metal particle 1 included in the composite particle. The resin composition 3 included in one composite particle may indirectly cover the surface of the metal particle 1. For example, an insulating coated film containing an inorganic compound (such as $SiO_2$) may directly cover the surface of one metal particle 1, or the resin composition 3 may directly cover the surface of the insulating coated film.

The upper limit value of the particle diameter of the large particles 5 is not particularly limited. For example, the particle diameter of the large particles 5 may be greater than 500 μm and 4000 μm or less, 500.1 μm or more and 4000.0 μm or less, greater than 500 μm and 2000 μm or less, or 500.1 μm or more and 2000.0 μm or less. The average particle diameter or the median diameter (D50) of the large particles 5 is not particularly limited. For example, the average particle diameter or the median diameter of the large particles 5 may be greater than 500 μm and 4000 μm or less, 500.1 μm or more and 4000.0 μm or less, greater than 500 μm and 2000 μm or less, or 500.1 μm or more and 2000.0 μm or less. For example, the particle diameter of the large particles 5 may be calculated from the particle size distribution of the compound powder 10 based on the mass, the volume, or the number of large particles 5. For example, the particle size distribution may be measured by a laser diffraction particle size distribution analyzer. For example, the particle size distribution may be calculated on the basis of the measurement of the mass or the volume of the large particles 5 by sieving. The shape of each of the large particles 5 and the small particles 7 is not particularly limited. For example, the shape of each of the large particles 5 and the small particles 7 may be a spherical shape, an approximately spherical shape, a flat shape, or an acicular shape.

The compound powder 10 may be fluidized by heating at a temperature lower than the thermal curing temperature of the resin composition 3, and the fluidized compound powder 10 may be molded. For example, the compound powder 10 is likely to be used for transfer molding. The transfer molding is a type of injection molding method. The transfer molding may be referred to as pressure molding. The transfer molding may include a step of heating the compound powder 10 in a heating chamber to be fluidized, and a step of feeding (injecting) the fluidized compound powder 10 into a metallic mold from the heating chamber through a casting runner.

A molding method for the compound powder 10 is not limited to the transfer molding. For example, the molding method for the compound powder 10 may be extrusion molding or compression molding (powder compacting molding).

The minimum melt viscosity of the compound powder 10 at 175°C may be 10 Pa·s or more and 250 Pa·s or less. Pa·s indicates Pascal second. Since the heated compound powder 10 has excellent fluidity when the minimum melt viscosity is in the range described above, the compound powder 10 is likely to flow through the narrow casting runner without a pause (without entrapping air bubbles), and is likely to be evenly filled in a space (a cavity) in the metallic mold. As a result thereof, the compact with few defects such as an appearance defect, an air gap, and a burr, and the cured product thereof are easily produced by the molding method described above. The minimum melt viscosity of the compound powder 10 at 175°C may be 21 Pa·s or more and 34 Pa·s or less.

The content of the metal powder in the compound powder 10 is not particularly limited. For example, the content of the metal powder in the compound powder 10 may be 94% by mass or more and 98% by mass or less. The content of the resin composition in the compound powder 10 may be 2% by mass or more and 6% by mass or less. In a case where the content of the metal powder in the compound powder 10 is 94% by mass or more, the soft magnetic characteristic of the compound powder 10 is easily improved. In a case where the content of the metal powder in the compound powder 10 is 98% by mass or less, and the content of the resin composition 3 in the compound powder 10 is 2% by mass or more, the compound powder 10 is likely to contain the plurality of large particles 5, the electrical insulating property of the compound powder 10 is easily improved, and the blocking of the compound powder 10 is easily suppressed. The content of the metal powder in the compound powder 10 may be 95.0% by mass or more and 95.2% by mass or less, and the content of the resin composition in the compound powder 10 may be 4.8% by mass or more and 5.0% by mass or less.

For example, the content of each of the metal powder and the resin composition 3 in the compound powder 10 may be specified by the following method based on the specific gravity of each of the compound powder 10, the metal powder, and the resin composition 3. The specific gravity (Unit: none) may be a ratio of the density of each of the compound powder 10, the metal powder, and the resin composition 3 to the density of a standard substance (for example, the density of water at 4°C). For example, the specific gravity of each of the compound powder 10, the metal powder, and the resin composition 3 may be measured by a general method (such as a water displacement method) based on the Archimedes' principle. The specific gravity of each of the metal powder and the resin composition 3 may be measured in advance before the compound powder 10 is produced. The compound powder 10 may be separated by an inert organic solvent that does not react with the metal powder and the resin composition 3 into the metal powder and the resin composition 3 (an organic substance dissolved in the organic solvent), or the specific gravity of each of the metal powder and the resin composition 3 separated from each other may be measured.

The specific gravity of the metal powder may be represented as $S_M$. The content of the metal powder in the compound powder 10 may be represented as $\alpha\%$ by mass. The specific gravity of the resin composition 3 may be represented as $S_R$. The content of the resin composition 3 in the compound powder 10 may be represented as $(100 - \alpha)\%$ by mass. The specific gravity $S_C$ of the compound powder 10 may be represented by Mathematical Formula 1 described below. On the basis of Mathematical Formula 1 described below, the content $\alpha$ of the metal powder in the compound powder 10 may be calculated from the measured each specific gravity ($S_M$, $S_R$, and $S_C$).

$$S_C = [(S_M \times \alpha) + \{S_R \times (100 - \alpha)\}]/100 \quad (1)$$

The compound powder 10 and the compact thereof may be used as a raw material for a magnetic core of a coil. That is, the cured product of the compound powder 10 may be the magnetic core of the coil. For example, a specific industrial product (a product including a coil) produced by using the compound powder 10 may be an inductor, a power source module, a transformer, a reactor, a thyristor valve, a noise filter (an EMI filter), a choke coil, a rotor and a yoke for a motor, a solenoid core (a fixed iron core) for an electromagnetic valve built in an electronically controlled fuel injector of an internal-combustion engine, and the like.

The compound powder 10 may have both of the electrical insulating property required for a sealing material for an electronic device and the soft magnetic characteristic (electromagnetic shielding capability) required for an electromagnetic shielding material. Therefore, the compound powder 10, and the compact and the cured product thereof may be a sealing material also serving as an electromagnetic shielding material. The compound powder 10, and the compact and the cured product thereof may be a sealing material for an electronic part or electrical equipment. For example, the sealing material also serving as the electromagnetic shielding material may be a sealing material (such as underfill) for a semiconductor package such as an IC package and an LSI package.

(Specific Example of Metal Powder)

The metal powder (the plurality of metal particles 1) may contain a plurality of types of metal powders with different particle diameters. For example, the metal powder may contain a first soft magnetic powder (a plurality of first soft magnetic particles) and a second soft magnetic powder (a plurality of second soft magnetic particles), and the particle diameter of the first soft magnetic powder may be greater than the particle diameter of the second soft magnetic powder. For example, the average particle diameter of the first soft magnetic powder may be greater than the average particle diameter of the second soft magnetic powder. For example, D50 (the median diameter) of the first soft magnetic powder may be greater than D50 of the second soft magnetic powder. For example, D90 of the first soft magnetic powder may be greater than D90 of the second soft magnetic powder. In a case where the compound powder 10 contains only the first soft magnetic powder with a large particle diameter as the metal powder, a gap is more likely to be formed between the plurality of adjacent first soft magnetic particles, and the filling rate of the metal powder in the compound powder 10 is less likely to increase. On the other hand, in a case where the compound powder 10 contains the first soft magnetic powder and the second soft magnetic powder as the metal powder, the second soft magnetic particles smaller than the first soft magnetic particles are filled in the gap between the plurality of first soft magnetic particles, and the filling rate of the metal powder in the compound powder 10 increases. In other words, by the compound powder 10 containing the first soft magnetic powder and the second soft magnetic powder with different particle diameters, the specific gravity of the compound powder 10 increases. As a result thereof, the soft magnetic characteristic is improved. Further, in accordance with an increase in the filling rate of the metal powder in the compound powder 10, the cured product of the compound powder 10 is densified, and the mechanical strength of the cured product is improved.

For example, the average particle diameter of the metal powder (the plurality of metal particles 1) may be 0.1 $\mu$m or more and 45 $\mu$m or less. For example, the average particle diameter of the first soft magnetic powder may be 11 $\mu$m or more and 45 $\mu$m or less. For example, the average particle diameter of the second soft magnetic powder may be 0.1 $\mu$m or more and 9.0 $\mu$m or less. In a case where the average particle diameter of the first soft magnetic powder is in the range described above, and the average particle diameter of the second soft magnetic powder is in the range described above, the filling rate of the metal powder in the compound powder 10 easily increases, and the soft magnetic characteristic and the mechanical strength are easily improved.

The average particle diameter, D50, and D90 of the metal powder may be calculated from a particle size distribution based on the mass, the volume, or the number of first soft magnetic particles constituting the first soft magnetic powder. The average particle diameter, D50, and D90 of the first soft magnetic powder may be calculated from a particle size distribution based on the mass, the volume, or the number of first soft magnetic particles constituting the first soft magnetic powder. The average particle diameter, D50, and D90 of the second soft magnetic powder may be calculated from a particle size distribution based on the mass, the volume, or the number of second soft magnetic particles constituting the second soft magnetic powder. Each of the particle size distributions may be measured by a laser diffraction particle size distribution analyzer. Each of the particle size distributions may be calculated on the basis of the measurement of the mass or the volume of each of the soft magnetic particles by sieving. The shape of each of the metal powder (the metal particles 1), the first soft magnetic particles, and the second soft magnetic particles is not particularly limited. For example, the shape of each of the metal powder (the metal particles 1), the first soft magnetic particles, and the second soft magnetic particles may be a spherical shape, an approximately spherical shape, a flat shape, or an acicular shape.

The mass of the first soft magnetic powder may be represented as M1, and the mass of the second soft magnetic powder may be represented as M2. M1/(M1 + M2) may be 0.70 or more and 0.95 or less, and M2/(M1 + M2) may be 0.05 or more and 0.30 or less. In a case where each of M1/(M1 + M2) and M2/(M1 + M2) is in the range described above, the second soft magnetic particles smaller than the first soft magnetic particles are easily filled in the gap between the plurality of first soft magnetic particles, and the filling rate of the metal powder in the compound powder 10 (the specific gravity of the compound powder 10) easily increases. As a result thereof, the soft magnetic characteristic and the mechanical strength are easily improved.

The compound powder 10 may further contain a non-metal filler, in addition to the metal powder. For example, the compound powder 10 may contain a filler consisting of silica ($SiO_2$) (a particulate filling material) as the non-metal filler. The particle diameter of the non-metal filler may be approximately or completely identical to the particle diameter of the metal powder.

The composition of the metal powder (each of the plurality of metal particles 1) is not particularly limited insofar as the metal powder is the soft magnetic material. For example, the metal powder may contain iron. The metal powder may further contain at least one metal element selected from the group consisting of a base metal element, a noble metal element, a transition metal element, and a rare earth element, in addition to iron. For example, the metal element other than iron that is contained in the metal powder may be at least one element selected from the group consisting of copper (Cu), titanium (Ti), manganese (Mn), cobalt (Co), nickel (Ni), zinc (Zn), aluminum (Al), tin (Sn), chromium (Cr), barium (Ba), strontium (Sr), lead (Pb), and silver (Ag). The metal powder may contain a non-metal element, in addition to the metal element. For example, the non-metal element contained in the metal powder may be at least one element selected from the group consisting of oxygen (O), beryllium (Be), phosphorus (P), boron (B), and silicon (Si).

The metal powder may contain at least one metal of pure iron, and an alloy containing iron (an iron-based alloy). The metal powder may consist of only pure iron. The metal powder may consist of only an iron-based alloy. The metal powder may consist of only pure iron and an iron-based alloy. For example, the iron-based alloy contained in the metal powder may be at least one alloy selected from the group consisting of a Fe-Cr-Si-based alloy, a Fe-Cr-based alloy, a Fe-Si-based alloy, a Fe-Si-Al-based alloy, a Fe-Ni-based alloy, a Fe-Cu-Ni-based alloy, a Fe-Co-based alloy, and a Fe-Ni-Cr-based alloy. The iron or the iron-based alloy contained in the metal powder may be crystalline or amorphous. The metal powder may contain a plurality of types of metal powders with different compositions.

A part or all of the plurality of metal particles 1 constituting the metal powder may be covered with the insulating coated film. A part or all of the surface of each of the metal particles 1 may be covered with the insulating coated film. By covering the metal powder with the insulating coated film, the electrical insulating property of the compound powder 10 is improved. In a case where the insulating coated film contains glass, the surface of the insulating coated film is easily smoothened, and friction between the plurality of metal particles 1 is easily suppressed. As a result thereof, the blocking of the compound powder 10 is easily suppressed, and the fluidity of the compound powder 10 is easily improved.

For example, the insulating coated film may contain at least one component selected from the group consisting of glass, a phosphoric acid (a phosphate), silica ($SiO_2$), iron oxide ($Fe_2O_3$), and chromium oxide ($Cr_2O_3$). For example, the glass may contain at least one element selected from the group consisting of oxygen (O), boron (B), sodium (Na), and aluminum (Al), in addition to silicon (Si). For example, the glass may contain at least one component of silicate glass (a silicate), phosphosilicate glass (a phosphosilicate), and borosilicate glass (a borosilicate). The composition of the insulating coated film may be measured by at least one analysis method of photoemission spectroscopy (XPS) and energy dispersive X-ray spectroscopy (EDX). The insulating coated film may be formed by a wet method using an alkoxysilane solution or the like, or a dry method such as mechano-fusion. For example, the thickness of the insulating coated film may be 10 nm or more and 200 nm or less. The thickness of the insulating coated film may be measured on the cross-sectional surface of the metal particle 1 by a transmission electron microscope (TEM) and EDX.

(Specific Example of Resin Composition)

The resin composition 3 is the remaining portion (a non-volatile component) excluding the metal powder and the organic solvent in the compound powder 10. The resin composition contains at least the thermosetting resin. The resin composition 3 may further contain at least one component selected from the group consisting of a curing agent, a curing accelerator (a curing catalyst), a coupling agent, a wax (a mold release agent), and a flame retardant, in addition to the thermosetting resin. Specific examples of each component are as described below.

The thermosetting resin contained in the resin composition 3 may be at least one resin selected from the group consisting of an epoxy resin, a phenolic resin, a bismaleimide resin, a polyimide resin, and a polyamide imide resin. The resin composition may further contain other resins (for example, a thermoplastic resin), in addition to the thermosetting resin. For example, the resin composition may further contain at least one other resin selected from the group consisting of a polyphenylene sulfide resin, an acrylic resin, a methacrylic resin, polyethylene, polypropylene, polystyrene, polyvinyl chloride, polyethylene terephthalate, and a silicone resin.

<Epoxy Resin and Curing Agent>

The epoxy resin may be at least one resin selected from the group consisting of a biphenyl-type epoxy resin, a stilbene-type epoxy resin, a diphenyl methane-type epoxy resin, a sulfur atom-containing epoxy resin, a novolac-type epoxy resin, a dicyclopentadiene-type epoxy resin, a salicylic aldehyde-type epoxy resin, a copolymerized epoxy resin of naphthols and phenols, an epoxidized aralkyl-type phenolic resin, a bisphenol-type epoxy resin, a glycidyl ether-type epoxy resin of alcohols, a glycidyl ether-type epoxy resin of a para-xylene-modified phenolic resin and/or a meta-xylene-modified phenolic resin, a glycidyl ether-type epoxy resin of a terpene-modified phenolic resin, a cyclopentadiene-type epoxy resin, a glycidyl ether-type epoxy resin of a polycyclic aromatic ring-modified phenolic resin, a glycidyl ether-type epoxy resin of a naphthalene ring-containing phenolic resin, a glycidyl ester-type epoxy resin, a glycidyl-type or methyl glycidyl-type epoxy resin, an alicyclic epoxy resin, a halogenated phenol novolac-type epoxy resin, an ortho-cresol novolac-type epoxy resin, a hydroquinone-type epoxy resin, a trimethylol propane-type epoxy resin, and a linear aliphatic epoxy resin obtained by oxidizing an olefin bond with an peroxy acid such as a peracetic acid.

At least a part of the epoxy resin may be a naphthalene-type epoxy resin having a naphthalene structure. The naphthalene-type epoxy resin may be a solid at an ordinary temperature. In a case where the compound powder 10 contains the naphthalene-type epoxy resin, a product produced from the compound powder 10 (the cured product of the compound powder 10) is likely to have a high mechanical strength at a room temperature and a high temperature. The naphthalene-type epoxy resin may be at least one resin selected from the group consisting of a naphthalene diepoxy compound, a naphthylene ether-type epoxy resin, a naphthalene novolac-type epoxy resin, a methylene-bonded dimer of a naphthalene diepoxy compound, a methylene-bonded body of a naphthalene monoepoxy compound and a naphthalene diepoxy compound, and the like. The epoxy resin may include a difunctional epoxy resin. For example, the difunctional epoxy resin may be at least one resin of an $\alpha$-naphthol-type epoxy resin and a $\beta$-naphthol-type epoxy resin.

The epoxy resin may include at least one resin of a trifunctional epoxy resin and a tetrafunctional epoxy resin. The naphthalene-type epoxy resin described above may be at least one resin of the trifunctional epoxy resin and the tetrafunctional epoxy resin. The trifunctional epoxy resin is an epoxy resin composed of a structural unit having three epoxy groups. The tetrafunctional epoxy resin is an epoxy resin composed of a structural unit having four epoxy groups. In a case where the epoxy resin includes at least one resin of the trifunctional epoxy resin and the tetrafunctional epoxy resin, in the process of the thermal curing of the compound powder 10, the epoxy resins are three-dimensionally cross-linked to each other to form a strong cross-linked network. As a result thereof, the movement of the epoxy resin in the cured product of the compound powder 10 is easily suppressed under a high temperature. That is, the glass transition temperature of each of the trifunctional epoxy resin and the tetrafunctional epoxy resin is higher than the glass transition temperature of the difunctional epoxy resin. Therefore, in a case where the epoxy resin includes at least one resin of the trifunctional epoxy resin and the tetrafunctional epoxy resin, the cured product of the compound powder 10 (the product produced from the compound powder 10) is likely to have a high mechanical strength at a high temperature.

The compound powder 10 may contain one type of epoxy resin among the epoxy resins described above. The compound powder 10 may contain a plurality of types of epoxy resins among the epoxy resins described above.

The curing agent is sorted into a curing agent for curing the epoxy resin in a range from a low temperature to a room temperature and a thermal curable curing agent for curing the epoxy resin along with heating. For example, the curing agent for curing the epoxy resin in the range from the low temperature to the room temperature is aliphatic polyamine, polyaminoamide, polymercaptan, and the like. For example, the thermal curable curing agent is aromatic polyamine, an acid anhydride, a phenolic resin, a phenol novolac resin, dicyan diamide (DICY), and the like. From the viewpoint of improving the heat resistance (the mechanical strength at a high temperature) of the cured product of the compound powder 10, the curing agent may be preferably the thermal curable curing agent, more preferably the phenolic resin, and even more preferably the phenol novolac resin.

A part or all of the curing agent may be a phenolic resin. For example, the phenolic resin may be at least one resin selected from the group consisting of an aralkyl-type phenolic resin, a dicyclopentadiene-type phenolic resin, a salicylic aldehyde-type phenolic resin, a novolac-type phenolic resin, a copolymerized phenolic resin of benzaldehyde-type phenol and aralkyl-type phenol, a para-xylene and/or meta-xylene-modified phenolic resin, a melamine-modified phenolic resin, a terpene-modified phenolic resin, a dicyclopentadiene-type naphthol resin, a cyclopentadiene-modified phenolic resin, a polycyclic aromatic ring-modified phenolic resin, a biphenyl-type phenolic resin, and a triphenyl methane-type phenolic resin. The phenolic resin may be a copolymer composed of two or more types of phenolic resins among the phenolic resins described above.

The phenol novolac resin may be a resin obtained by condensing or co-condensing phenols and/or naphthols and aldehydes under an acid catalyst. The phenols constituting the phenol novolac resin may be at least one selected from the group consisting of phenol, cresol, xylenol, resorcin, catechol, bisphenol A, bisphenol F, phenyl phenol, and aminophenol. The naphthols constituting the phenol novolac resin may be at least one selected from the group consisting of $\alpha$-naphthol, $\beta$-naphthol, and dihydroxynaphthalene. The aldehydes constituting the phenol novolac resin may be at least one selected from the group consisting of formaldehyde, acetaldehyde, propionaldehyde, benzaldehyde, and salicylic aldehyde.

The curing agent may be a compound having two phenolic hydroxyl groups in one molecule. For example, the compound having two phenolic hydroxyl groups in one molecule may be at least one compound selected from the group consisting of resorcin, catechol, bisphenol A, bisphenol F, and substituted or non-substituted biphenol.

The compound powder 10 may contain, as the curing agent, one type of phenolic resin among the phenolic resins described above. The compound powder 10 may contain, as the curing agent, a plurality of types of phenolic resins among the phenolic resins described above.

A ratio of a hydroxyl equivalent of the phenolic resin to an epoxy equivalent of the epoxy resin may be 0.5 or more and 1.5 or less. That is, a ratio of an active group (a phenolic OH group) in the phenolic resin that reacts with the epoxy group in the epoxy resin may be 0.5 equivalents or more and 1.5 equivalents or less with respect to 1 equivalent of the epoxy group in the epoxy resin.

<Curing Accelerator>

The curing accelerator (the curing catalyst) is not limited insofar as the curing accelerator is a composition reacting with the epoxy resin to accelerate the curing of the epoxy resin. For example, the curing accelerator may be a urea compound. The curing accelerator may be imidazoles such as alkyl group-substituted imidazole or benzoimidazole. The curing accelerator may be a phosphorus-based curing accelerator. The compound powder 10 may contain one type of curing accelerator. The compound powder 10 may contain a plurality of types of curing accelerators.

The blending amount of the curing accelerator is not particularly limited. From the viewpoint of improving the curability and the fluidity of the epoxy resin during moisture-absorption, the blending amount of the curing accelerator may be 0.1 parts by mass or more and 30 parts by mass or less, with respect to 100 parts by mass of the epoxy resin. The content of the curing accelerator may be 0.001 parts by mass or more and 5 parts by mass or less, with respect to the total mass of the epoxy resin and the curing agent (for example, a phenolic resin).

<Coupling Agent>

The coupling agent may be a coupling agent reacting with a glycidyl group of the resin composition such as an epoxy resin. The coupling agent improves cohesiveness between the metal powder and the resin composition 3, and improves the mechanical strength of the cured product of the compound powder 10. The coupling agent reacting with the glycidyl group may be a silane-based compound (a silane coupling agent). For example, the silane coupling agent may be at least one coupling agent selected from the group consisting of epoxy silane, mercaptosilane, aminosilane, alkyl silane, ureidosilane, acid anhydride-based silane, and vinyl silane. The compound powder 10 may contain one type of coupling agent among the coupling agents described above. The compound powder 10 may contain a plurality of types of coupling agents among the coupling agents described above.

<Wax>

The compound powder 10 may contain the wax. The wax may be referred to as a lubricant or a mold release agent. By the compound powder 10 containing the wax, the fluidity and the moldability of the compound powder 10 are improved, and the mold releasability of the compound powder 10 is improved. As a result thereof, the accuracy of the shape and the dimension of the product produced from the compound powder 10 (the cured product of the compound powder 10) is improved, and a structural defect on the product is easily suppressed. For example, the wax may be at least one compound of a saturated fatty acid, a saturated fatty acid salt, and saturated fatty acid ester. The wax may be a synthetic wax. The compound powder 10 may contain one type of wax among the waxes described above. The compound powder 10 may contain a plurality of types of waxes among the waxes described above.

<Flame Retardant>

The compound powder 10 may contain the flame retardant. For example, the flame retardant may be at least one compound selected from the group consisting of a bromine-based flame retardant, a phosphorus-based flame retardant, a hydrated metal compound-based flame retardant, a silicone-based flame retardant, a nitrogen-containing compound, a hindered amine compound, an organic metal compound, and an aromatic engineering plastic. The compound powder 10 may contain one type of flame retardant among the flame retardants described above, or may contain a plurality of types of flame retardants among the flame retardants described above.

(Method for Producing Compound Powder)

A method for producing a compound powder includes a step of preparing a mixed powder containing the metal powder and the resin composition (step A), and a step of classifying the mixed powder to obtain the compound powder containing the plurality of large particles (step B).

<Step A>

For example, in step A, the metal powder and each component constituting the resin composition may be kneaded while heating to obtain the mixed powder. A lump of the mixed powder (the agglomerated mixed powder) may be obtained by heating and kneading the metal powder and the resin composition, and the mixed powder may be obtained by pulverizing the lump of the mixed powder.

For example, a kneading means for the metal powder and the resin composition may be a kneader, a roll, or a stirrer. By heating and mixing the metal powder and the resin composition, the resin composition may cover a part or all of the surface of each metal particle constituting the metal powder. By heating and mixing the metal powder and the resin composition, a part or all of the resin composition may become a semi-cured product.

The metal powder and all the components constituting the resin composition may be collectively kneaded. A mixture of the metal powder and the coupling agent may be prepared in advance, and the mixture may be kneaded with the other components of the resin composition. A mixture of each component of the resin composition excluding the curing accelerator and the metal powder may be prepared in advance, and the mixture may be kneaded with the curing accelerator. A mixture of each component of the resin composition excluding the wax and the metal powder may be prepared in advance, and the mixture may be kneaded with the wax.

A kneading time depends on the kneading means, the volume of the kneading means, and the production amount of the compound powder. The kneading time is not limited. For example, the kneading time may be 1 minute or longer and 20 minutes or shorter. For example, the temperature (the heating temperature) of the metal powder and the resin composition during kneading may be lower than the thermal curing temperature of the thermosetting resin. The heating temperature may be a temperature at which the semi-cured product of the thermosetting resin (the resin composition in the stage B) and the cured product of the thermosetting resin (the resin composition in the stage C) are prevented from being generated. The heating temperature may be a temperature lower than the activation temperature of the curing accelerator. For example, the heating temperature may be 50°C or higher and 150°C or lower.

A method for preparing the mixed powder is not limited to the method described above. For example, the mixture may be obtained by kneading the metal powder, the resin composition, and the organic solvent while heating, and the mixed powder may be obtained by drying (and pulverizing) the mixture. By bringing the organic solvent in which the resin composition is dissolved into contact with the surface of the metal particles, the metal particles are easily covered with the resin composition, and the mixed powder containing the large particles is easily obtained. From the same reason, a mixed liquid may be obtained by mixing the metal powder and the resin composition in the organic solvent, and the mixed powder may be obtained by drying (and pulverizing) the mixed liquid. For example, the organic solvent may be at least one type of solvent selected from the group consisting of acetone, methyl ethyl ketone (2-butanone), methyl isobutyl ketone (4-methyl-2-pentanone), benzene, toluene, xylene, N-methyl-2-pyrrolidone (NMP), and the like.

<Step B>

**In** step B, the mixed powder is classified to obtain the compound powder containing the plurality of large particles with a particle diameter of greater than 500 $\mu$m. For example, by classifying the mixed powder using a sieve with an opening of 500 $\mu$m, the large particles are separated from the mixed powder. That is, the large particles in the mixed powder do not pass through the sieve with an opening of 500 $\mu$m, and the small particles in the mixed powder pass through the sieve. Only the large particles obtained by classifying the mixed powder may be used for the compound powder. The compound powder in which the content of the large particles is 40% by mass or more may be obtained by mixing the large particles and the small particles after classifying.

Hereinafter, the mass (Unit: g) of the mixed powder before classifying is represented as $M_M$. The total mass of the plurality of large particles obtained by the classification using the sieve with an opening of 500 $\mu$m is represented as $M_L$. $M_L$ can be referred to as the total mass of the plurality of large particles in the mixed powder before classifying. The total mass of the plurality of small particles in the mixed powder before classifying is represented as $M_S$. It is obvious that $M_M$ is equal to $M_L + M_S$.

The opening of the sieve used to classify the mixed powder is not limited to 500 $\mu$m. A plurality of sieves with different openings may be used to classify the mixed powder. For example, in a case where the opening of any sieve X is any positive real number x (Unit: $\mu$m), and x is less than 500 $\mu$m, by classifying the mixed powder with the sieve X, a powder X' with a particle diameter of greater than x $\mu$m is separated from the mixed powder. That is, the particles with a particle diameter of greater than x $\mu$m do not pass through the sieve X, and small particles with a particle diameter of x $\mu$m or less pass through the sieve. The powder X' with a particle diameter of greater than x $\mu$m contains the small particles with a particle diameter of greater than x $\mu$m and 500 $\mu$m or less, and the large particles with a particle diameter of greater than 500 $\mu$m. The mass of the powder X' with a particle diameter of greater than x $\mu$m is represented as $M_X$. The powder X' contains all the large particles derived from the mixed powder. Therefore, the total mass of the large particles in the powder X' is coincident with $M_L$ described above, and the content of the large particles in the powder X' is $\{(M_L/M_X) \times 100\}$ % by mass. In a case where $\{(M_L/M_X) \times 100\}$ is 40% by mass or more, the powder X' itself with a particle diameter of greater than x $\mu$m can be used as the compound powder according to this embodiment.

The particle size distribution of the mixed powder before classifying may be measured in advance. By selecting or adjusting the opening x of the sieve X, on the basis of the particle size distribution of the mixed powder, it is possible to freely control $\{(M_L/M_X) \times 100\}$ in a range of 40% by mass or more and less than 100% by mass. For example, the opening x of the sieve X may be 75 $\mu$m or more and 300 $\mu$m or less. As the opening x of the sieve X increases, the content of the plurality of small particles in the powder X' decreases, and $\{(M_L/M_X) \times 100\}$ increases.

The method for producing a compound powder is not limited to the method described above.

For example, the compound powder in which the content of the large particles is 40% by mass or more may be produced by a pulverization step of pulverizing the mixed powder or the lump of the mixed powder obtained in step A described above. By adjusting various implementation conditions of the pulverization step and selecting a pulverizing means, the degree of pulverization of the mixed powder or the lump of the mixed powder is freely adjusted, and the particle diameter and the particle size distribution of the compound powder obtained by the pulverization step are freely controlled. That is, by adjusting various implementation conditions of the pulverization step and selecting the pulverizing means, the formation of small particles from the mixed powder or the lump of the mixed powder is suppressed, and the compound powder in which the content of the large particles is 40% by mass or more is obtained.

For example, the compound powder in which the content of the large particles is 40% by mass or more is produced by a blending step of mixing a plurality of types of compound powders with different particle diameters or particle size distributions. In a case where at least one type of compound powder among the plurality of types of compound powders with different particle size distributions contains a plurality of large particles, and the particle diameter or the particle size distribution of each of the plurality of types of compound powders is measured in advance, by adjusting a mixing ratio (for example, a mass ratio or a volume ratio) of the plurality of types of compound powders in the blending step, the compound powder in which the content of the large particles is 40% by mass or more is obtained. For example, by the step B (the classification of the mixed powder) described above, a large powder consisting of only the plurality of large particles, and a small powder consisting of only the plurality of small particles may be obtained. By mixing 40 parts by mass or more of the large powder and 60 parts by mass or less of the small powder, the compound powder in which the content of the large particles is 40% by mass or more is obtained.

(Compact and Method for Producing Cured Product)

By molding the compound powder described above, a molded body (a comapct) is obtained. A heat treatment on the compact (thermal curing of the resin composition in the compact) causes the plurality of metal particles to be strongly bound to each other by the cured product of the resin composition, and the cured product of the compound powder is obtained. For example, a molding method for the compound powder may be transfer molding, extrusion molding, or compression molding (powder compacting molding). **In** accordance with industrial products produced by using the compound powder, the dimension and the shape of a metallic mold used to mold the compound powder may be selected. The heat treatment temperature of the compact may be a temperature at which the resin composition in the compact is sufficiently cured, and may be higher than or equal to the activation temperature of the curing accelerator. For example, the heat treatment temperature may be 100°C or higher and 300°C or lower. For example, a heat treatment time may be several minutes or longer and 10 hours or shorter. In order to suppress the oxidization of the metal powder in the compact, the heat treatment of the compact may be performed under an inert atmosphere.

(Method for Analyzing Composition)

By analyzing a sample obtained by the pulverization of each of the compact and the cured product, the composition of the compound powder itself used to produce each of the compact and the cured product may be retrospectively analyzed. By dissolving the sample in the organic solvent, the metal powder may be separated from the resin composition 3 dissolved in the organic solvent. Each of the metal powder and the resin composition 3 separated from each other may be individually analyzed. Even in a case where the unused compound powder itself is directly analyzed, each of the metal powder and the resin composition separated from each other may be individually analyzed by the method described above.
For example, the metal powder may be analyzed and specified by one or more analysis methods selected from the group consisting of X-ray fluorescence (XRF), inductively coupled plasma (ICP) atomic emission spectroscopy, photoemission spectroscopy (X-ray photoelectron spectroscopy; XPS), energy dispersive X-ray spectroscopy (EDS or EDX), and mass spectrometry (MS).
For example, each component (such as the thermosetting resin) constituting the resin composition may be analyzed and specified by one or more analysis methods selected from the group consisting of infrared spectroscopy (IR), nuclear magnetic resonance (NMR), gas chromatography (GC), high performance liquid chromatography (HPLC), and mass spectrometry.
The present invention is not necessarily limited to the embodiment described above. Various modifications of the present invention are available within a range not departing from the spirit of the present invention, and modification examples thereof are also included in the present invention.

**Examples**

The present invention will be described in detail by Examples and Comparative Examples described below. The present invention is not limited by Examples described below.

(Example 1)

<Step A: Preparation of Mixed Powder>

As a metal powder, a mixture of a first soft magnetic powder and a second soft magnetic powder was used.
As the first soft magnetic powder, 9A4-II 053C03, manufactured by EPSON ATMIX Corporation, was used. The average particle diameter of the first soft magnetic powder was 24 μm, which was approximately even. The first soft magnetic powder was a powder of a soft magnetic alloy consisting of Fe and Si, but not Cr.
As the second soft magnetic powder, "SAP-2C", manufactured by SINTOKOGIO, LTD., was used. "SAP-2C" was a powder of a soft magnetic alloy consisting of Fe, Cr, and Si. The average particle diameter of the second soft magnetic powder was 2 μm, which was approximately even.
The content of the first soft magnetic powder in the metal powder was 82% by mass.
The content of the second soft magnetic powder in the metal powder was 18% by mass.
As a component constituting a resin composition, an epoxy resin, a curing agent, a curing accelerator (a catalyst), a coupling agent, and a wax (a mold release agent) were used.
As the epoxy resin, "NC-3000", manufactured by Nippon Kayaku Co., Ltd., and "TECHMORE VG-3101L", manufactured by Printec Corporation, were used.

"NC-3000" is a biphenyl aralkyl-type epoxy resin. The mass of "NC-3000" was 60 g.

"TECHMORE VG3101L" is a trifunctional epoxy resin, and is a derivative of 1-[$\alpha$-methyl-$\alpha$-(4-hydroxyphenyl) ethyl]-4-[$\alpha,\alpha$-bis(4-hydroxyphenyl) ethyl] benzene. The mass of "TECHMORE VG3101L" was 40 g.

As the curing agent, "HF-3M", manufactured by UBE Corporation (formerly Meiwa Plastic Industries, Ltd.), was used. "HF-3M" is a phenolic resin. The mass of "HF-3M" was 43.2 g.

As the curing accelerator (the catalyst), "U-CAT3512T", manufactured by San-Apro Ltd., was used. "U-CAT3512T" is aromatic dimethyl urea. The mass of "U-CAT3512T" was 5.9 g.

As the coupling agent, "KBM-803" and "KBM-5803", manufactured by Shin-Etsu Chemical Co., Ltd., were used.

"KBM-803" is 3-mercaptopropyl trimethoxysilane. The mass of "KBM-803" was 1.9 g.

"KBM-5803" is 8-methacryloxyoctyl trimethoxysilane. The mass of "KBM-5803" was 1.9 g.

As the wax (the mold release agent), "Licowax OP", manufactured by Clariant Chemicals Co., Ltd., was used. "Licowax OP" is montanic acid ester partially saponified by calcium hydroxide. The mass of "Licowax OP" was 2.0 g.

A mixed powder was obtained by kneading the metal powder and all the components of the resin composition while heating. The temperature of the raw material during kneading was 130°C at maximum. The content of the metal powder in the mixed powder was adjusted to 95.5% by mass. In other words, the content of the resin composition in the mixed powder was adjusted to 4.5% by mass.

<Step B: Classification of Mixed Powder>

A compound powder of Example 1 was separated from the mixed powder by classifying the mixed powder using a sieve with an opening of 75 $\mu$m. Among the mixed powder, only a powder that did not pass through the sieve was used as the compound powder of Example 1. That is, the compound powder of Example 1 was a powder with a particle diameter of greater than 75 $\mu$m. The mass $M_Y$ (Unit: g) of the compound powder was measured. The mass $M_Y$ corresponds to the mass $M_X$ of the powder X' described above.

<Content of Large Particles in Compound Powder>

A plurality of large particles with a particle diameter of greater than 500 $\mu$m were separated from the compound powder by classifying the compound powder using a sieve with an opening of 500 $\mu$m. The total mass $M_L$ of the large particles separated from the compound powder was measured.

The content of the large particles in the compound powder is represented as $\{(M_L/M_Y) \times 100\}$% by mass. The content of the large particles in the compound powder of Example 1 is shown in Table 1 described below.

The content of small particles in the compound powder is represented as $[\{(M_Y - M_L)/M_Y\} \times 100]$% by mass. The content of the small particles in the compound powder of Example 1 is shown in Table 1 described below.

<Specific Gravity of Compound Powder, and Content of Metal Powder in Compound Powder>

The specific gravity of the compound powder was measured. The specific gravity of the compound powder of Example 1 is shown in Table 1 described below. By the calculation method described above based on the specific gravity, the content (the filling rate) of the metal powder in the compound powder was calculated. The content of the metal powder in the compound powder of Example 1 is shown in Table 1 described below.

<Dielectric Withstanding Voltage>

A test piece was obtained by transfer molding of the compound powder at 175°C, and postcuring (heating at 175°C for 5.5 hours) subsequent to the transfer molding. A pressure applied to the compound powder during transfer molding was 13.5 MPa. The test piece was in the shape of a circular plate. The dimension of the test piece was a diameter of 50 mm $\times$ thickness of 0.4 mm.

In the following test, a voltage was applied to a pair of electrodes interposing the test piece therebetween by using a source measure unit. The pair of electrodes were made of stainless steel. Among the pair of electrodes, the end surface of the positive electrode was in the shape of a circle of 10 mm$\phi$. Among the pair of electrodes, the negative electrode was a plate having a flat surface. In order to reduce a small gap formed between the test piece and the negative electrode, the surface of the negative electrode was covered with a sheet consisting of conductive rubber. The test piece was provided on the sheet. That is, the test piece was closely attached to the surface of the negative electrode via the sheet. The end surface of the positive electrode was brought directly into contact with the circular surface of the test piece.

A current in the test piece was continuously measured while continuously increasing a direct-current voltage. Then, a voltage (a breakdown voltage) at a time point when the current passing through the test piece exceeded 10 mA was read. The test was repeated a total of 14 times by the same method except that the position of the positive electrode was different. The median value of the breakdown voltages read in 14 tests is defined as the dielectric withstanding voltage (Unit: V/mm) of the test piece. As the source measure unit, a high-voltage dielectric characteristic evaluation apparatus, manufactured by Yamayo Tester Co., Ltd., was used.

A high dielectric withstanding voltage indicates an excellent electrical insulating property of the compound powder. For example, the dielectric withstanding voltage is preferably 500 V/mm or more, and the dielectric withstanding voltage is more preferably 550 V/mm or more. The dielectric withstanding voltage of Example 1 is shown in Table 1 described below.

<Blocking>

100 g of the compound powder was accommodated in a disposable cup. The volume of the disposable cup was 300 ml. 300 gf of a load was evenly applied to the flat surface of the compound powder in the disposable cup. That is, the compound powder in the disposable cup was evenly compressed by 300 gf of the load. The mass of the compressed compound powder is represented as $M_{TOTAL}$. That is, $M_{TOTAL}$ is 100 g.

The compressed compound powder is classified by a sieve with an opening of 2 mm. Among the compressed compound powder, the mass of the powder that passed through the sieve is represented as $M_{PASS}$. A pass rate is defined as $\{(M_{PASS}/M_{TOTAL}) \times 100\}\%$ by mass. As the compound powder agglomerates due to the compression of the compound powder, the compound powder is less likely to pass through the sieve, and the pass rate decreases. By suppressing the blocking (the agglomeration) of the compound powder associated with the compression of the compound powder, the compound powder is more likely to pass through the sieve, and the pass rate increases. That is, it is preferable that the pass rate is high. For example, it is preferable that the pass rate is 50% or more.

$M_{PASS}$ of Example 1 was measured. $M_{PASS}$ was 100 g, and the pass rate was 100% by mass. That is, all the compressed compound powder passed through the sieve.

<Spiral Flow>

The compound powder was accommodated in a transfer molding machine provided with a metallic mold. The spiral flow (Unit: cm) of the compound powder was measured at a metallic mold temperature of 175°C, an injection pressure of 6.9 MPa, and a molding time of 120 seconds. The spiral flow is a length that the compound powder flows into a groove formed in the metallic mold. That is, the spiral flow is the fluid distance of the softened or liquefied compound powder. The groove into which the compound powder flows is in the shape of a spiral curve (a spiral of Archimedes). As the compound powder is more likely to flow, the spiral flow increases. As the transfer molding machine, a 100 KN transfer molding machine (PZ-10 type), manufactured by Kodaira Seisakusho Co., Ltd., was used. As the metallic mold, a metallic mold based on ASTM D3123 was used. It is preferable that the spiral flow is 100 cm or more. The spiral flow of Example 1 is shown in Table 1 described below.

<Gel Time>

A gel time (a gelation time) for the compound powder at 175°C was measured. As a measurement device (a vulcanization tester) for the gel time, CURELASTOMETER, manufactured by ENEOS Materials Co., Ltd. (formerly JSR Corporation), was used. The gel time (Unit: second) of Example 1 is shown in Table 1 described below.

< Minimum Melt Viscosity>

The minimum melt viscosity (Unit: Pa·s) of the compound powder at 175°C was measured by using a viscometer. As the viscometer, CFT-100 (a flow tester), manufactured by SHIMADZU CORPORATION, was used. The minimum melt viscosity of Example 1 is shown in Table 1 described below.

(Examples 2 to 4 and Comparative Example 1)

The opening of the sieve used in step B of each of Examples 2 to 4 is shown in Table 1 described below. A compound powder of each of Examples 2 to 4 was prepared by the same method as that in Example 1 except for the opening of the sieve used to classify the mixed powder.

Step B of Comparative Example 1 was not implemented. That is, the mixed powder before classifying was used as a compound powder of Comparative Example 1.

Various measurements using the compound powder of each of Examples 2 to 4 and Comparative Example 1 were implemented by the same method as that in Example 1. The results of various measurements of each of Examples 2

EP 4 748 514 A1

to 4 and Comparative Example 1 are shown in Table 1 described below.

[Table 1]

| Table 1 | | Unit | Comparative Example 1 | Example 1 | Example 2 | Example 3 | Example 4 |
|---|---|---|---|---|---|---|---|
| Opening of sieve | | mm | - | 75 | 150 | 300 | 500 |
| Compound powder | Content of small particles | % by mass | 70 | 60 | 40 | 20 | 0 |
| | Content of large particles | % by mass | 30 | 40 | 60 | 80 | 100 |
| | Specific gravity | - | 5.94 | 5.85 | 5.85 | 5.88 | 5.82 |
| | Content of metal powder | % by mass | 95.5 | 95.1 | 95.1 | 95.2 | 95.0 |
| Dielectric withstanding voltage | | V/mm | 445 | 544 | 548 | 550 | 552 |
| Blocking test (pass rate) | | % by mass | 2 | 100 | 100 | 100 | 100 |
| Spiral flow | | cm | 94 | 111 | 115 | 112 | 108 |
| Gel time | | second | 45 | 43 | 44 | 43 | 43 |
| Minimum melt viscosity | | Pa×s | 35 | 34 | 21 | 21 | 23 |

**Reference Signs List**

1: metal particle (metal powder), 3: resin composition, 5: large particle, 7: small particle, 10: compound powder.

**Claims**

1.  A compound powder comprising:

    a metal powder; and
    a resin composition,
    wherein the metal powder is a soft magnetic material,
    the resin composition contains a thermosetting resin,
    the compound powder contains a plurality of large particles with a particle diameter of greater than 500 $\mu$m, and
    a content of the large particles in the compound powder is 40% by mass or more and 100% by mass or less.

2.  The compound powder according to claim 1,

    wherein at least a part of the plurality of large particles includes
    at least one metal particle constituting the metal powder, and
    a resin composition covering the metal particle.

3.  The compound powder according to claim 1,
    wherein a minimum melt viscosity of the compound powder at 175°C is 10 Pa·s or more and 250 Pa·s or less.

4.  The compound powder according to claim 1,
    wherein a content of the metal powder in the compound powder is 94% by mass or more and 98% by mass or less.

5.  The compound powder according to claim 1,
    wherein the resin composition further contains at least one component selected from the group consisting of a curing agent, a curing accelerator, a coupling agent, and a wax.

6. The compound powder according to claim 1,
   wherein the compound powder is used for a magnetic core of a coil.

7. The compound powder according to claim 1,
   wherein the compound powder is a sealing material.

8. A molded body comprising
   the compound powder according to claim 1.

9. A cured product of the compound powder according to claim 1.

10. A method for producing the compound powder according to claim 1, comprising:

    a step of preparing a mixed powder including the metal powder and the resin composition; and
    a step of classifying the mixed powder to obtain the compound powder containing the plurality of large particles.

# Fig.1

## INTERNATIONAL SEARCH REPORT

| International application No. |
|---|
| **PCT/JP2023/034304** |

| **A. CLASSIFICATION OF SUBJECT MATTER** |
|---|
| ***B22F 1/05***(2022.01)i; ***B22F 1/102***(2022.01)i<br>FI: B22F1/05; B22F1/102 100 |
| According to International Patent Classification (IPC) or to both national classification and IPC |

| **B. FIELDS SEARCHED** |
|---|
| Minimum documentation searched (classification system followed by classification symbols)<br><br>B22F1/05; B22F1/102 |
| Documentation searched other than minimum documentation to the extent that such documents are included in the fields searched<br><br>Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

| **C. DOCUMENTS CONSIDERED TO BE RELEVANT** | | |
|---|---|---|
| Category* | Citation of document, with indication, where appropriate, of the relevant passages | Relevant to claim No. |
| X | JP 2013-247214 A (TDK CORPORATION) 09 December 2013 (2013-12-09)<br>    paragraphs [0001]-[0053], fig. 1 | 8-9 |
| A | | 1-7, 10 |
| X | JP 2001-226753 A (SUMITOMO SPECIAL METALS CO., LTD.) 21 August 2001 (2001-08-21)<br>    paragraphs [0001]-[0088] | 8-9 |
| A | | 1-7, 10 |
| Y | WO 2019/106810 A1 (HITACHI CHEMICAL COMPANY, LTD.) 06 June 2019 (2019-06-06)<br>    paragraphs [0001]-[0089] | 1-10 |
| Y | WO 2008/146712 A1 (HITACHI METALS, LTD.) 04 December 2008 (2008-12-04)<br>    paragraphs [0001]-[0133] | 1-10 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034304**

| Patent document cited in search report | | | Publication date (day/month/year) | Patent family member(s) | Publication date (day/month/year) |
|---|---|---|---|---|---|
| JP | 2013-247214 | A | 09 December 2013 | (Family: none) | |
| JP | 2001-226753 | A | 21 August 2001 | (Family: none) | |
| WO | 2019/106810 | A1 | 06 June 2019 | CN 111406085 A paragraphs [0001]-[0136] | |
| WO | 2008/146712 | A1 | 04 December 2008 | (Family: none) | |

Form PCT/ISA/210 (patent family annex) (January 2015)

**EP 4 748 514 A1**

**Patent documents cited in the description**

- JP 2008277374 A